# EUROPEAN PATENT APPLICATION

(11) **EP 2 357 606 A1**
(43) Date of publication of application: **17.08.2011**
(21) Application number: 09275133.8
(22) Date of filing: 24.12.2009
(51) Int. Cl.: G06T 5/00

(54) **Enhancing the visibility of features of an image**

(71) Applicant: BAE SYSTEMS plc, London SW1Y 5AD (GB)
(72) Inventor: The designation of the inventor has not yet been filed
(74) Representative: Edis, Ronald Malcolm

(57) **Abstract**

A method and system are disclosed for enhancing the visibility of features of an image. The method comprises the steps of acquiring image data corresponding to at least one image feature using sensing means; processing the image data to identify changes in adjacent data points corresponding to a boundary of the at least one image feature; and, generating modified image data corresponding to the processed image data.

## Description

The present invention relates to a method of presenting information and particularly, but not exclusively, to a method of enhancing the visibility of features of an image.

A head-up display (HUD) is any transparent display which presents data to a user, without requiring the user to look away from his or her usual viewpoint. The display is typically rigidly mounted upon a chassis of an aircraft cockpit, for example, such that a pilot can view the displayed image and the outside scene simultaneously. When the display is mounted upon a users head or helmet, such that the display extends in front of one or both of the users eyes, the display is often referred to as a helmet or head mounted display (HMD). The HMD offers the advantage that the displayed image remains visible to the user regardless of the users viewing direction.

Displaying images from a sensor such as a camera, infrared camera or radar, on a HUD or HMD can help a pilot under difficult external visual conditions. However, greyscale images which are bright enough to be viewed on a HUD or HMD can obscure the outside scene detracting from the usefulness of the system as there is a mandatory requirement that the pilot is able to see the ground before committing to landing an aircraft.

The human eye requires a dynamic range in luminance of approximately 100:1 to render a good quality image. The lowest visible grey level in a HUD or HMD, as established from conventional operation of HUD and HMD, is approximately 20% of the background luminance. Therefore, if the maximum specified ambient background luminance is 10,000ft-L (foot-Lambert), then the minimum grey level must not be less than 200ft-L. Consequently, to provide the full dynamic range necessary for a pilot to suitably discriminate features of an image, the brightest display level is required to be approximately 20,000ft-L, which added to the background of 10,000ft-L makes a total of 30,000ft-L, which is too bright for the pilot to perform his visual tasks. It has been demonstrated that a luminance of 15,000ft-L, although not damaging, is uncomfortable even for an adapted eye. It is a requirement therefore, that the peak display brightness should be limited to a level comfortable to the eye if it is to be acceptable to the pilot.

A tentative maximum value of 3,500ft-L has been suggested, which added to the maximum from the background scene gives a combined peak luminance value of 13,500ft-L. However, the minimum black display level (based upon a 100:1 range) will be only 35ft-L, which is less than 20% of the background luminance and so will provide insufficient black level contrast against a bright ambient. Therefore, there is a problem operating a display with a good greyscale rendition under high background luminance.

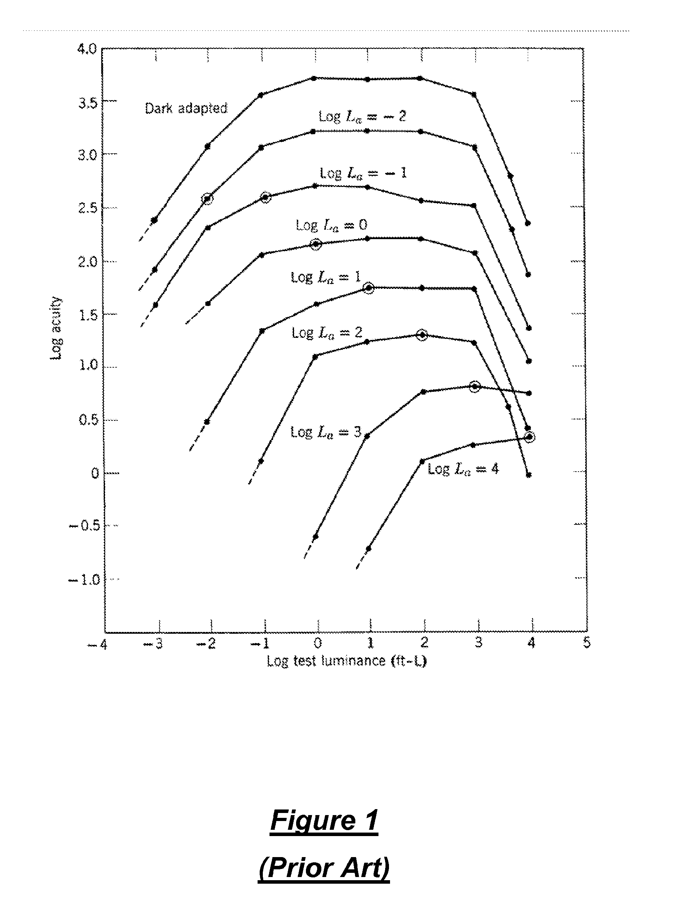

Evidence for this is given in Figure 1 of the drawings which illustrates how the luminance range for good acuity changes with the light adaptation of the human eye. For example, the useful luminance range is shown to extend over five decades (0.01 - 1000 ft-L) for an eye adaptation level of 0.1ft-L (*Log Lₐ* = -1), namely low background luminance, but reduces to two decades (100 - 10,000 ft-L) for an eye adaptation level of 10,000 ft-L (*Log Lₐ* = 4), namely high background luminance. Accordingly, it is difficult to render features of an image visible on a display under high background luminance, since there is an insufficient useful luminance range.

We have now devised a method and system for enhancing the visibility of features of an image.

In accordance with the present invention as seen from a first aspect, there is provided a method of enhancing the visibility of features of an image, the method comprising the steps of:
- acquiring image data corresponding to at least one image feature using sensing means;
- processing the image data to identify changes in adjacent data points corresponding to a boundary of the at least one image feature; and,
- generating modified image data corresponding to the processed image data.

The method of the present invention thus reduces the sensor image to a set of key features such as edges of image features. This enables an outline of the image features to be displayed without obscuring the direct view through a HUD or a HMD of the outside scene.

Preferably, the method further comprises generating a modified image of the at least one image feature using the modified image data. The modified image preferably comprises the at least one image feature illustrated in outline.

The method preferably further comprises combining the modified image data with the image data to generate enhanced image data.

Preferably, the method further comprises generating an enhanced display of said image using the enhanced image data. Preferably, the enhanced display comprises the at least one image feature illustrated in outline, superimposed over the at least one image feature.

In an alternative embodiment, the acquisition of image data preferably comprises acquiring first image data of the at least one image feature using first sensing means and acquiring second image data of the at least one image feature using second sensing means.

Preferably, the method further comprises processing one of the first or second image data to identify changes in adjacent data points corresponding to a boundary of the at least one image feature. The method further comprises generating modified first or second image data corresponding to the processed first or second image data.

The modified first or second image data preferably comprises data corresponding to an outline of the at least one image feature.

Preferably, the method further comprises combining the modified first or second image data with the unprocessed second or first image data, respectively, to generate enhanced image data.

The method preferably comprises generating an enhanced display of the image using the enhanced image data. Preferably, the enhanced image comprises an outline of the at least one image feature corresponding to the modified first or second image data superimposed on the at least one image feature corresponding to the second or first image data, respectively.

The processing of the image data, or the first or second image data, preferably comprises the application of a filter, and more preferably, a convolution filter to the image data, or the first or second image data.

In accordance with the present invention as seen from a second aspect, there is provided a method of enhancing the visibility of features of an image, the method comprising the steps of:
- acquiring first image data corresponding to at least one image feature using first sensing means;
- acquiring second image data corresponding to the at least one image feature using second sensing means;
- processing one of the first or second image data to identify changes in adjacent data points corresponding to a boundary of the at least one image feature;
- generating modified first or second image data corresponding to the processed first or second image data; and,
- combining the modified first or second image data with the unprocessed second or first image data to generate enhanced image data.

The method of the second aspect preferably further comprises generating an enhanced display of the image using the enhanced image data. Preferably, the enhanced image comprises an outline of the at least one image feature corresponding to the modified first or second image data superimposed on the at least one image feature corresponding to the second or first image data, respectively.

The processing of the first or second image data, preferably comprises the application of a filter, and more preferably, a convolution filter to the first or second image data.

In accordance with the present invention as seen from a third aspect there is provided a system for enhancing the visibility of features of an image, the system comprising image sensing means for acquiring image data corresponding to at least one image feature, processing means for processing the image data to generate modified data comprising data corresponding to a boundary of the at least one image feature.

Preferably, the sensing means comprises at least one sensor, such as a camera which is arranged to operate at visible wavelengths and/or a camera which is arranged to operate at other than visible wavelengths, such as infrared and radio wavelengths.

The processing means is preferably arranged to apply a filter to the image data. Preferably, the filter comprises a convolution filter.

Preferably, the system further comprises a display for displaying the modified image corresponding to the modified image data. The display is preferably further arranged display an enhanced image corresponding to the enhanced image data. Preferably, the display comprises a head-up display or a head mounted display.

An embodiment of the present invention will now be described by way of example only and with reference to the accompanying drawings, in which:
Figure 1 is a graphical representation of Log(Acuity) against Log(Luminance) at various adapting luminances of the human eye - all curves above the lowest are shifted upward by 0.5 on the ordinate for clarity; and,
Figure 2 is a schematic illustration of a system according to an embodiment of the present invention;
Figure 3a is a typical landscape view of a pilot from a cockpit of an aircraft;
Figure 3b is a modified image of the landscape view of figure 3a;
Figure 3c is a superposition of figures 3a and 3b, where the black outline of figure 3b is illustrated in white for clarity;
Figure 4a is a simplified thermal image view of a tree and house as viewed on a head-up display;
Figure 4b is a simplified modified image of tree and house as viewed on a head-up display; and
Figure 4c is a superposition of figure 4a and figure 4b.

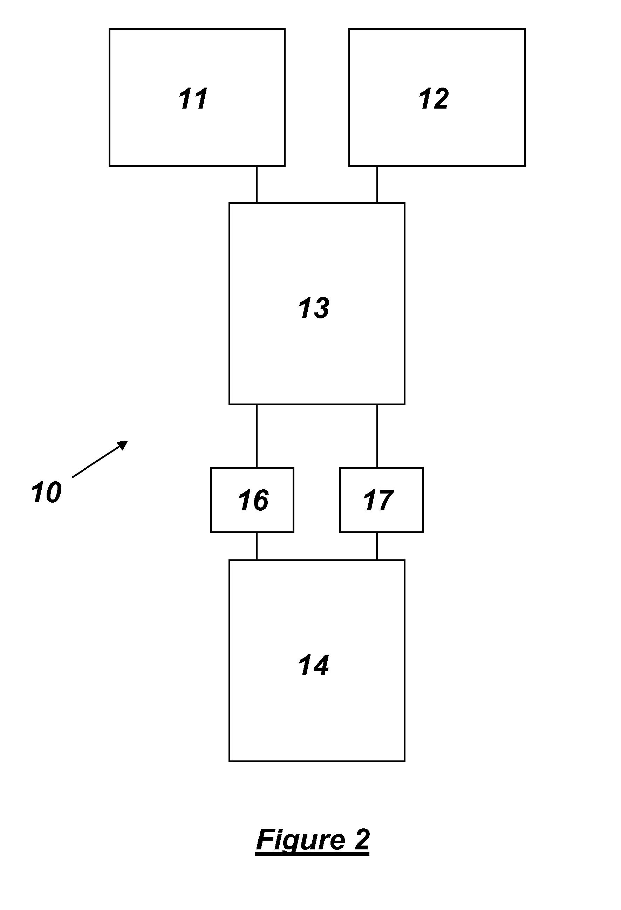

Referring to figure 2 of the drawings, there is illustrated a system 10 for enhancing the visibility of an image according to an embodiment of the present invention. The system 10 comprises sensing means, such as a camera 11 operable at visible wavelengths and/or a thermal imaging or radar sensor 12, for example. The camera 11 and sensor 12 are arranged to acquire real time image data, such as a view of the landscape from an aircraft (not shown), and may comprise image data corresponding to a colour image of the landscape, or a greyscale or thermal image of the landscape, for example. The system 10 further comprises a processor 13, which is arranged to apply a convolution filter to the image data from the camera 11 and/or sensor 12 to identify the boundary or edges of the image features in real time. The processor 13 is further arranged to generate modified image data which comprises data relating to the boundary or edges of the image features. It is a requirement that the filter process does not introduce significant delay nor introduce clutter into the data, since this could otherwise lead to the display of erroneous information.

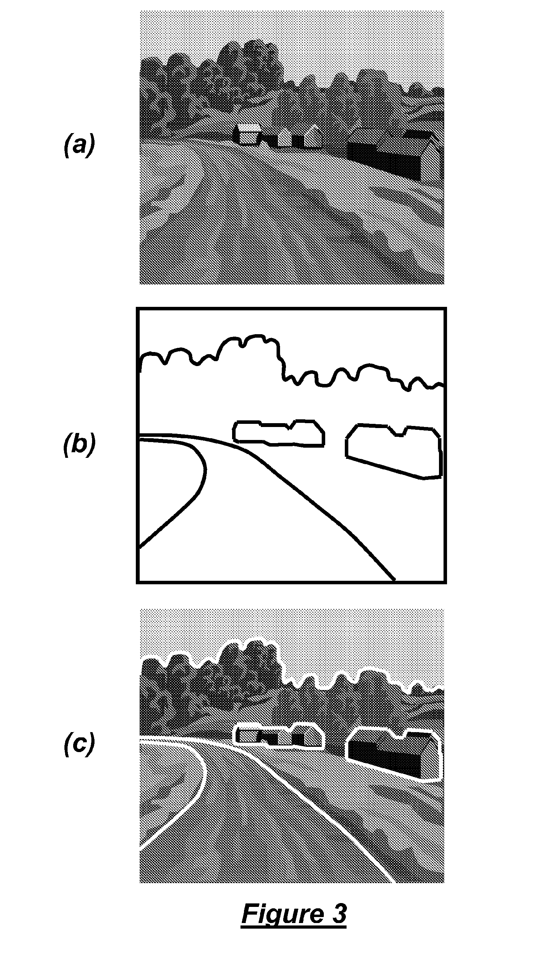

The system 10 further comprises a display unit 14, such as a head-up display or head mounted display, for displaying a modified image of the view of the landscape according to the modified image data. For example, the pilots view out from a cockpit of an aircraft may be similar to that illustrated in figure 3a of the drawings. The display unit 14 is arranged to display the modified image, namely the outline of the landscape features (as illustrated in figure 3b of the drawings) as viewed by the pilot, such that the modified image appears superposed over the outside scene (as illustrated in figure 3c of the drawings), to render the features of the landscape more discernable. The outline can be made sufficiently bright to overcome a high background luminance, while also minimising any obscuration of the outside view of the aircraft (not shown), for example. If the modified image illustrated the features as solid images however, then clearly the total luminance of the modified image on the display would obscure the outside view and may even be too bright for the viewer (not shown).

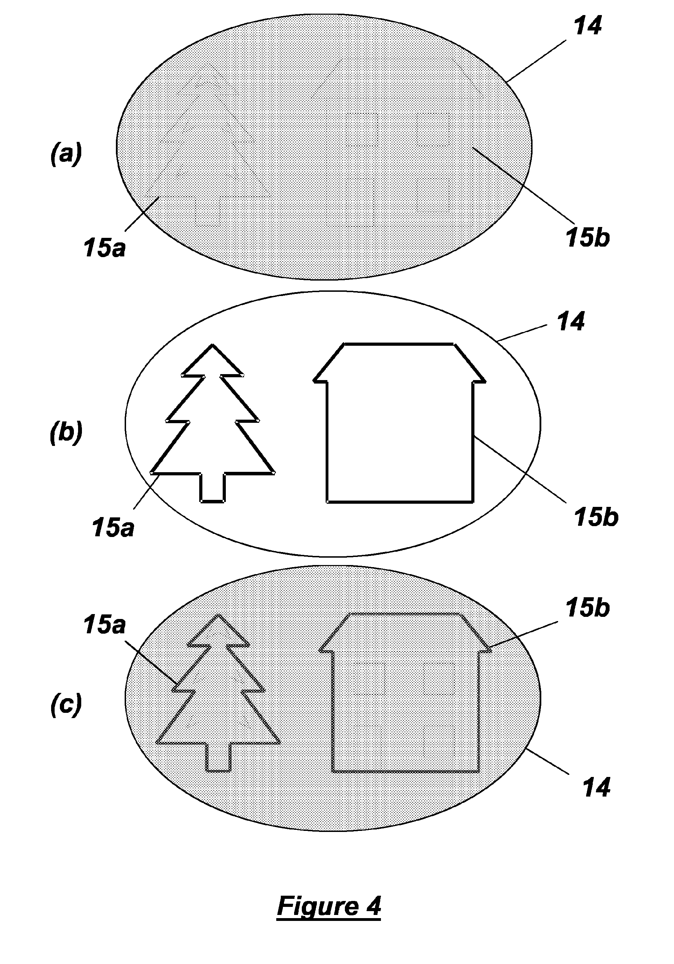

The display unit 14 is also arranged to display the colour image or greyscale thermal image from the camera 11 or sensor 12, for example, as illustrated in Figure 4a of the drawings, when external luminance levels are low and particularly in the absence of ground features, for example when flying at night or in heavy cloud. The display 14 is further arranged to display a combination or blend of the modified image, as illustrated in figure 4b of the drawings and the original image, such that the modified image and original image become superimposed upon the display 14 as illustrated in Figure 4c of the drawings. It is envisaged for example, that the modified image alone, namely the outline of the image features, may lack information to sufficiently identify image features or provide perception of range. However, adding some greyscale to fill-in between the outline of the image features by superimposing the modified image with the original greyscale or thermal image, for example, will provide sufficient visual cues to identify the object.

The system 10 further comprises a first and second control input 16, 17 for controlling the relative luminance of the modified image and the greyscale image, for example. It is envisaged that a pilot (not shown) for example, would select the most appropriate relative luminance setting for the prevailing situation. For example, when flying an aircraft above sunlit cloud in high ambient background luminance, it is envisaged that the pilot would select a high luminance modified image (as illustrated in Figure 3a of the drawings) with the greyscale image switched off, whereas, when flying in cloud in reduced ambient luminance, it is envisaged that the pilot may select a mix of the greyscale image and the modified image (as illustrated in Figure 3c of the drawings).

From the foregoing therefore, it is evident that the method and system of the present invention provides for an increased visibility of image features on a display under various ambient luminance levels.

## Claims

1. A method of enhancing the visibility of features of an image, the method comprising the steps of:
- acquiring image data corresponding to at least one image feature using sensing means;
- processing the image data to identify changes in adjacent data points corresponding to a boundary of the at least one image feature; and,
- generating modified image data corresponding to the processed image data.

2. A method according to claim 1, further comprising generating a modified image of the at least one image feature using the modified image data.

3. A method according to claim 2, wherein the modified image comprises the at least one image feature illustrated in outline.

4. A method according to any preceding claim, further comprising combining the modified image data with the image data to generate enhanced image data.

5. A method according to claim 4, further comprising generating an enhanced display of said image using the enhanced image data.

6. A method according to claim 5, wherein the enhanced display comprises the at least one image feature illustrated in outline, superimposed over the at least one image feature.

7. A method according to claim 1, wherein the acquisition of image data comprises acquiring first image data of the at least one image feature using first sensing means and acquiring second image data of the at least one image feature using second sensing means.

8. A method according to claim 7, further comprising processing one of the first or second image data to identify changes in adjacent data points corresponding to a boundary of the at least one image feature.

9. A method according to claim 8, further comprising generating modified first or second image data corresponding to the processed first or second image data.

10. A method according to claim 9, wherein the modified first or second image data comprises data corresponding to an outline of the at least one image feature.

11. A method according to claim 9 or 10 further comprising combining the modified first or second image data with the unprocessed second or first image data, to generate enhanced image data.

12. A method according to claim 11, further comprising generating an enhanced display of the image using the enhanced image data.

13. A method according to claim 12, wherein the enhanced image comprises an outline of the at least one image feature corresponding to the modified first or second image data, superimposed on the at least one image feature corresponding to the second or first image data, respectively.

14. A method of enhancing the visibility of features of an image, the method comprising the steps of:
- acquiring first image data corresponding to at least one image feature using first sensing means;
- acquiring second image data corresponding to the at least one image feature using second sensing means;
- processing one of the first or second image data to identify changes in adjacent data points corresponding to a boundary of the at least one image feature;
- generating modified first or second image data corresponding to the processed first or second image data; and,
- combining the modified first or second image data with the unprocessed second or first image data to generate enhanced image data.

15. A system for enhancing the visibility of features of an image, the system comprising image sensing means for acquiring image data corresponding to at least one image feature, processing means for processing the image data to generate modified data comprising data corresponding to a boundary of the at least one image feature.

16. A system according to claim 15, further comprising means for combining the modified image data with the image data to produce enhanced image data.
